# EUROPEAN PATENT SPECIFICATION

(11) **EP 0 577 562 B1**
(45) Date of publication and mention of the grant of the patent: **16.10.2002**
(21) Application number: 93810465.0
(22) Date of filing: 01.07.1993
(51) Int. Cl.: C08L 1/10, C08K 5/10

(54) **Biodegradable plastic materials, method of producing them, and their use**
Biologisch abbaubare Kunststoffmaterialien, Verfahren zur ihrer Herstellung, sowie ihre Verwendung
Matières plastiques biodégradables, procédé pour leur fabrication et leur utilisation

(30) Priority: 02.07.1992 US 906878
(43) Date of publication of application: 05.01.1994
(73) Proprietor: MAZZUCCHELLI 1849 S.p.A., I-21043 Castiglione Olona (VA) (IT)
(72) Inventor: Best, Bernd, D-6802 Mörfelden (DE); Wollmann, Klaus, D-6251 Eschhofen (DE); Ach, Alexander, Dr., D-6078 Neu-Isenburg (DE)
(74) Representative: Faggioni, Giovanmaria

(56) References cited:
- EP-A- 0 394 803

## Description

The present invention relates to plastic materials which, on the one hand, are easily biodegraded and, on the other hand, can be subjected to various common and suitable molding processes without any restrictions.

EP-A-0 394 803, the entire specification of which is enclosed herein by reference, discloses a plastic material which shows an excellent biodegradability and, meanwhile, has been successfully produced on a large scale. The disclosed biodegradable, moldable plastic material is composed of about 50 to 90 weight percent cellulose ester, up to about 40 weight percent of a biodegradable carboxylic acid ester as softener and up to about 5 to 30 percent of at least one linear, aliphatic hydroxyl group containing polyester having a molecular weight from 500 to 3000 and possibly organic acids and/or organic acid esters different from said softener. In one possible example sixty parts by weight cellulose acetate, 30 parts by weight acetyl triethyl citrate and 10 parts by weight linear, aliphatic polyester were mixed in a high speed ball mixer and then extruded and granulated. The material was processed in an extrusion blow molder at 180 °C and about 4 to 5 bar blowing pressure and molded into oil 1 lamp containers having a use weight of 20 g. The enclosures exhibited excellent transparency and homogeneity and withstood temperatures of about 60 °C. They were tested for biodegradability in both aerobic conditions in an aqueous medium (a "storm test") and in anaerobic conditions in clarification sludge. The storm test, which is known to those skilled in the art, corresponded to the OECD Guidelines and can be employed to prove the biodegradability of plastics. A lamp container was comminuted and the pieces were examined for decomposition in an aqueous medium containing samples of creek water, river water and water from purification plants. The degree of decomposition was determined by the amount of carbon dioxide released upon exposure to CO₂-free air. The decomposition was monitored until 60 percent of the material had degraded as determined by carbon dioxide release. The material was 60 percent degraded after about 500 days in aerobic, aqueous conditions. It could be proved that basic decomposition of the material occured, since the polymer compound was included in the decomposition process without transition. If decomposition had not occured, the process would have stopped at about 40 percent, which corresponds to the percentage of low molecular weight components in the material. As a control for the test the decomposition of sodium benzoate was determined. The anaerobic decomposition was determined by measuring the weight loss of a complete lamp container in clarification sludge over time. A degree of over 70 percent decomposition was obtained in 77 weeks.

This excellent biodegradability was surprising because cellulose acetate as the main component (60 parts by weight), in contrary to the employed polyester (merely 10 parts by weight), is biodegradable only in very long time periods. In other decomposition experiments by means of composting techniques the amount of the linear aliphatic polyester as well biodegradable component could even be lowered to about 5 weight percent. The plastic material was still biodegradable as a whole in considerably short time periods corresponding with the above values.

The well biodegradable plastic material, therefore, has already been produced and sold for several years. All plastic products (e.g. bottles, films, thin sheets) exhibited excellent transparency and homogeneity and, if desired, flexibility, as well as a long service life. Whereas the material may be molded by injections molding, blow molding or even extrusion molding (e.g. bottle extrusion) without difficulties a considerable smoke development is to be recognized especially in extrusion or calendering of films or plastic sheeting. In order to avoid a high technical expenditure for handling this smoke development, for example, in view of a sufficient working security the inventors tried to find a composition which, on the one hand, exhibits all advantageous characteristics of the above plastic material and, on the other hand, does not develop critical amounts of smoke, especially, when subjected to extrusion or calendering processes.

Surprisingly the inventors found out that very small additions of water soluble AQ-nylon in the range from about 0,5 to about 5 weight percent could substantially reduce the smoke development to a sufficiently low degree. Water soluble AQ-nylon is a nylon polymer of the formula 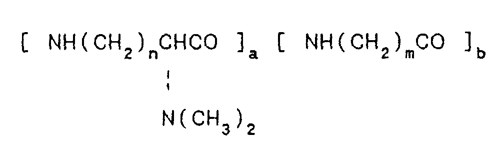 where a and b are from about 2,3 to about 2,7 (that is, degree of polymerization is between about 2,3 and about 2,7), and m and n are integers less than or equal to about 12, and may be 1, 2, 3, 4, 5, 6, 7, 8, 9, 11 or 12. (AQ-nylon is described in Miyama, H., Kawata, M., and Nosaka, Y., "Immobilization of enzyme on dimethyl-aminated nylon gels", Biotechnology and Bioengineering, v. 27 n. (1985), pp. 1403-1410; Miyama, H., Kobayashi, T., and Nosaka, Y.,"Immobilization of enzyme on nylon containing pendant quaternized amine groups", Biotechnology and Bioengineering, v. 26 n. 11 (1984) pp. 1390-1392; and Miyama, H., Kobayashi, T., and Nosaka, Y., "Immobilization of urease on synthetic polymers", Biotechnology and Bioengineering, v. 24 n. 12 (1982) pp. 2757-2763, each of which are incorporated herein by reference.)

It was not only surprising that such small amounts could greatly improve the extrusion and calendering processability and substantially reduce the considerable smoke due to acetic acid vapors. It is, in fact, also remarkable that this water soluble addition is compatible with the other compounds cellulose ester and e.g. citric acid ester which are not water soluble and that the final material or product exhibit the same excellent characteristics (transparency, homogeneity and sufficient biogredability).

The inventors also found out that other not water soluble standard nylons like nylon 6 and nylon 66 which have already been combined with cellulose ester by blending in order to provide a fire retardant composition (US 3,992,337) cannot successfully be combined with the inventional composition. The resulting "products" are neither transparent nor homogenous.

Furthermore, AQ-nylon is a hygroscopic material and binds residual moisture during processing, helps prevent hydrolytic fission reactions of the other components in the material.

The inventive composition with AQ-nylon is particularly suitable for the smoke free production of plastic sheeting from which articles such as shopping bags are produced in the conventional way.

The inventive moldable plastic material comprises at least 50 weight percent of cellulose ester, from 5 to 40 weight percent of biodegradable carboxylic acid ester, glycol ester or glycol ether as softener, from 5 to 30 percent of linear aliphatic polyester carrying hydroxyl groups and from 0,5 to 5 weight percent AQ-nylon of the formula 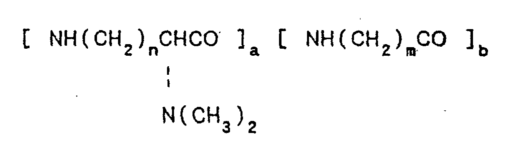 where a and b are from about 2,3 to about 2,7, and m and n are independently integers less than or equal to about 12.

The cellulose ester is preferably cellulose acetate (secondary type) with an acetyl content between about 52 and about 56 percent, but may also be cellulose acetobutyrate.

The softener has to be biodegradable which means that its biodegradability can be proved by a test corresponding with OECD Guidelines like the storm test and satisfies the criterions of these guidelines for a biodegradable substance. The softener may be selected from the group consisting of glycerol triacetate, citric acid ester, tartaric acid ester and succinic acid ester and is most preferably citric acid ester or glycerol triacetate.

Said citric acid ester is particularly acetyl triethyl citrate.

The polyester has referably a molecular weight from about 500 to 3000 g/mol in terms of number average as usually determined by means of end groups for this range of molecular weights.

The plastic material preferably comprises at least 60 weight percent of said cellulose ester, from 20 to 30 weight percent of said softener, from 10 to 15 percent of said polyester and from 1 to 2 weight percent of said AQ-nylon.

The plastic material may further comprise organic acid ester or organic acid different from said softener, preferably itaconic acid dimethyl ester, lauric acid, maleic acid, itaconic acid and polylactic acid, preferably in a quantity up to about 15 weight percent of the remaining components.

Furthermore, the plastic material, if desired, may comprise a flame inhibiting additive, preferably selected from a group containing organophosphorus compounds, particularly hydroxyethane phosphoric acid dimethyl ester, in a quantity up to about 20 weight percent to the weight of the remaining components, or iron compounds, particularly organic iron (II) compounds, and/or manganese compounds in a quantity up to about 5 weight percent of the remaining components.

The optional additives and their advantages are already disclosed in EP-A-0 394 803.

The inventional method of producing the plastic material according to any preceding claim, comprises the steps of:
a) mixing said cellulose ester, said softener, said polyester and, if desired, said organic acid esters different from said softerer and said flame inhibiting additives, and
b) heating, injection molding, extruding and/or calendering, processing under pressure or film casting immediately after said mixing and essentially avoiding the absorption of moisture to produce a biodegradable, plastic material,
whereby said AQ-nylon is optionally added
in step a) or in step b).

In step a) mixture is achieved by mixing the components in liquid (softener) or powder (cellulose acetate) form or by providing granulates of said components, whereby said granulates are produced in step a) by mixing the components, extruding and granulating them, and wherein it is again possible to add said AQ-nylon during mixing or extruding in step a) or alternatively in step b).

With other words, it is possible to mix all components inclusive AQ-nylon in step a), or to mix all components exclusive AQ-nylon which is then added or even later in step b) after heating in granulated form, or to mix all components inclusive AQ-nylon, followed by extrusion and granulation in order to provide granules or pellets in step a) whereby it is alternatively possible- to add the AQ-nylon in step a) during mixing of all components or during extruding before granulating or even after granulating, or in step b) after heating the granules without AQ-nylon.

Preferably the AQ-nylon is added in the molding step after heating in granulated form.

The mixture is preferably prepared in a high speed mixer. The preparation thus obtained is then granulated at from about 160 °C to about 200 °C, is pelletized, if desired, and can be molded in this form in an injection molding or blow molding process, by calendering, by a further extrusion step, if desired followed by a calendering step, by pressing under pressure or by a film casting step. Preferably for the extrusion is a double screw extruder. The extrudate is comminuted. It is particularly advantageous to extrude the mixture or, more precisely, feed it into the extruder directly following the mixing as described above, thereby essentially avoiding the absorption of moisture.

The following examples represent possible advantageous compositions and methods for producing the inventional plastic material.

### Reference Example 1

A mixture of 65 weight percent cellulose acetate, 25 weight percent triacetin and 10 weight percent aliphatic linear polyester is prepared in a high speed mixer and extruded and granulated at about 200 °C. The granulate mixture is extruded in an extruder 19/25 D which has a three-zone worm 3:1, with a temperature of 170 °C at the inlet, which rises up to 180 °C at the nozzle. The material is then processed, at a controlled temperature of 75 °C, into a flat sheet by way of a triple roller extraction system with a broadly slotted nozzle having dimensions of 75 x 0,5 mm. The resulting film is highly transparent and flexible. This film is then shaped into a blister shell in a laboratory deep drawing system.

In this example, it is possible to omit the AQ-nylon due to the small nozzle and the laboratory scale of the whole system. However, in production systems for such films the AQ-nylon has to be added to avoid a great expenditure of safety means against the smoke development due to acetic acid vapors. The experiments showed that the above composition and a lot of other ones according to the claimed versions, e.g. those materials disclosed in the examples of EP-A-0 394 803, can be combined with additions of about 0,5 to 5 weight percent of AQ-nylon with the advantageous effect of substantially supressing any smoke development and without altering the characteristics of the material.

### Example 2

A mixture of 65 weight percent cellulose acetate, 25 weight percent triacetin and 10 weight percent aliphatic linear polyester is prepared and extruded and granulated as in example 1. Water soluble, granulated AQ-nylon is added to the mixture to 2 weight percent as compared to the total final weight of the composition. Thus the final make-up of the composition is 63,7 weight percent cellulose acetate, 24,5 weight percent triacetin, 9,8 weight percent aliphatic linear polyester and 2 weight percent AQ-nylon. This granulate mixture is then extruded and processed by way of a circular slot nozzle having a diameter of 2 mm. The extruder temperature is from 160 °C at the inlet to 170 °C at the nozzle. (The granulated water soluble AQ-nylon can also be initially combined with the other components thereby making the second extrusion unnecessary.) There is only a minimal amount of smoke developed during processing. Thermoplastic strands, which are glass clear and free of bubbles are obtained.

### Example 3

60 weight percent cellulose acetate, 30 weight percent citric acid ester and 10 weight percent of linear, aliphatic polyester are treated as in example 2 together with 2 weight percent water soluble AQ-nylon (as compared to the- total final weight. of the composition). The extrusion temperatures are between 170 °C and 180 °C. Again, smoke development is negligible. and glass clear and homogeneous products are obtained.

The inventional material can be molded in any desired shape by means of molding techniques according to the claims. However, the inventional material, or with other words, the addition of AQ-nylon, is extremely recommendable whenever the applied technique would imply a considerable smoke development. While every common or known plastic products (containers of various forms for food, combustible substances, e.g. for cemetary light designs, or any other purpose) can be molded from the inventional composition it is therefore particularly advantageous to use the inventional material for producing films or sheets because of the particular smoke development in this case. The inventional plastic films and sheets can be used as packing material and, for this purpose, be further processed by any standard methods. Besides the excellent quality of these packing materials their biodegradability represents an essential advantage.

## Claims

1. Biodegradable, moldable plastic material comprising at least 50 weight percent of cellulose ester, from 5 to 40 weight percent of biodegradable carboxylic acid ester, glycol ester or glycol ether as softener, from 5 to 30 weight percent of a linear aliphatic hydroxyl groups containing polyester and from 0,5 to 5 weight percent AQ-nylon of the formula 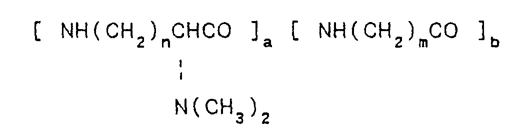 where a and b are from 2,3 to 2,7, and m and n are independently integers less than or equal to 12.

2. The plastic material according to claim 1, comprising at least 60 weight percent of said cellulose ester, from 20 to 30 weight percent of said softener, from 10 to 15 percent of said polyester and from 1 to 2 weight percent of said AQ-nylon.

3. The plastic material according to claim 1 or 2, wherein said cellulose ester is acetobutyrate and/or cellulose acetate and most preferably cellulose acetate.

4. The plastic material according to any preceding claim-, wherein said softener is selected from the group consisting of glycerol triacetate, citric acid ester, tartaric acid ester and succinic acid ester and is most preferably citric acid ester or glycerol triacetate.

5. The plastic material according to claim 4, wherein said citric acid ester is acetyl triethyl citrate.

6. The plastic material according to any preceding claim, wherein said polyester has a molecular weight from 500 to 3000 g/mol.

7. The plastic material according to any preceding claim, further comprising organic acid ester or organic acid different from said softener, preferably itaconic acid dimethyl ester, lauric acid, maleic acid, and polylactic acid, preferably in a quantity up to 15 weight percent of the remaining components.

8. The plastic material according to any preceding claim, further comprising a flame inhibiting additive, preferably selected from a group containing organophosphorus compounds, particularly hydroxyethane phosphoric acid dimethyl ester, in a quantity up to 20 weight percent to the weight of the remaining components, or iron compounds, particularly organic iron (II) compounds, and/or manganese compounds in a quantity up to 5 weight percent of the remaining components.

9. Method of producing the plastic material according to any preceding claim, comprising the steps of:
a) mixing said cellulose ester, said softener, said polyester and, if desired, said organic acid esters different from said softerer and said flame inhibiting additives, and
b) heating, injection molding, extruding and/or calendering, processing under pressure or film casting immediately after said mixing and: essentially avoiding the absorption of moisture to produce a biodegradable, plastic material,
whereby said AQ-nylon is added either in step a) or in step b).

10. Method according to claim 17, wherein, in step a) mixture is achieved by mixing powders and- liquids or providing granulates of said components, whereby said granulates are produced in step a) by mixing the components, extruding and granulating them, and wherein it is again possible to add said AQ-nylon during mixing or extruding in step a) or alternatively in step b).

## Patentansprüche

1. Biologisch abboubares, formbares Plastikmaterial, umfassend mindestens 50 Gewichtsprozent Zelluloseester, 5 bis 40 Gewichtsprozent biologisch abbaubare Carboxylsäureester, Glykolester oder Glykoläther als Weichmacher, 5 bis 30 Gewichtsprozent eines linearen, aliphatischen Polyesters, der Hydroxylgruppen enthält, und 0,5 bis 5 Gewichtsprozent AQ-Nylon mit der Formel 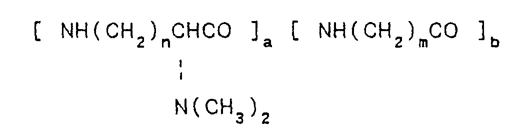 worin a und b von 2,3 bis 2,7 betragen und m und n unabhängige ganze Zahlen kleiner oder gleich 12 sind.

2. Plastikmaterial nach Anspruch 1, umfassend mindestens 60 Gewichtsprozent des Zelluloseesters, 20 bis 30 Gewichtsprozent des Weichmachers, 10 bis 15 Prozent des Polyesters und 1 bis 2 Gewichtsprozent des AQ-Nylons.

3. Plastikmaterial nach Anspruch 1 oder 2, bei dem der Zelluloseester ein Acetobutyrat und/oder ein Zelluloseacetat und am besten ein Zelluloseacetat ist.

4. Plastikmaterial nach einem der vorhergehenden Ansprüche, bei dem der Weichmacher aus der Gruppe bestehend aus Glycerintriacetat, Zitronensäureester, Tartarsäureester und Succinylsäureester ausgewählt ist und am besten aus Zitronensäureester oder Glycerintriacetat besteht.

5. Plastikmaterial nach Anspruch 4, bei dem der Zitronensäureester ein Acetyltriethylcitrat ist.

6. Plastikmaterial nach einem der vorstehenden Ansprüche, bei dem der Polyester ein Molekulargewicht von 500 bis 3000 g/Mol hat.

7. Plastikmaterial nach einem der vorstehenden Ansprüche, des Weiteren umfassend organischen Säureester oder organischen Säure, die sich von dem Weichmacher unterscheidet, vorzugsweise Itaconsäuredimethylester, Laurylsäure, Maleinsäure und Polymilchsäure, vorzugsweise in einer Menge bis zu 15 Gewichtsprozent der verbleibenden Komponenten.

8. Plastikmaterial nach einem der vorstehenden Ansprüche, des Weiteren umfassend einen flammhemmenden Zusatz, vorzugsweise ausgewählt aus einer Gruppe, die organische Phosphorkomponenten enthält, insbesondere Hydroxyethan-Phosphorsäure-Dimethylester, in einer Menge bis zu 20 Gewichtsprozent des Gewichts der verbleibenden Komponenten, oder Eisenkomponenten, insbesondere organische Eisen (II)-Komponenten, und/oder Mangankomponenten in einer Menge bis zu 5 Gewichtsprozent der verbleibenden Komponenten.

9. Verfahren zum Herstellen des Plastikmaterials noch einem der vorstehenden Ansprüche, umfassend die Schritte:
a) Mischen des Zelluloseesters, des Weichmachers, des Polyesters und, falls gewünscht, der organischen Säureester, die sich von dem Weichmacher unterscheiden, und den flammhemmenden Zusätzen, und
b) Erhitzen, Spritzgießen, Extrudieren und/oder Kalandern, Verarbeiten unter Druck oder Filmgießen unmittelbar nach dem Mischen und im Wesentlichen Vermeiden der Absorption von Feuchtigkeit, um ein biologisch abbaubares Plastikmaterial zu herzustellen, wobei das AQ-Nylon in Schritt a) oder in Schritt b) zugefügt wird.

10. Verfahren nach Anspruch 17, bei dem in Schritt a) die Mischung durch Mischen von Pulvern und Flüssigkeiten oder durch Bereitstellen von Granulaten der Komponenten erzielt wird, wobei die Granulate in Schritt a) durch Mischen, Extrudieren und Granulieren der Komponenten produziert werden, und bei dem es gleichfalls möglich ist, das AQ-Nylon während dem Mischen oder Extrudieren in Schritt a) oder alternativ in Schritt b) zuzugeben.

## Revendications

1. Matière plastique moulable biodégradable comprenant au moins 50 % en poids d'ester de cellulose, de 5 à 40 % en poids d'ester d'acide carboxylique, d'ester de glycol ou d'éther de glycol, biodégradable, servant de plastifiant, de 5 à 30 % en poids d'un polyester contenant des groupes hydroxyle aliphatiques linéaires et de 0,5 à 5 % en poids de AQ-nylon de formule : 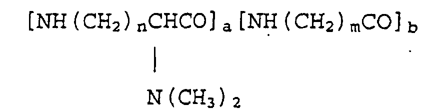 dans laquelle a et b valent de 2,3 à 2,7, et m et n sont indépendamment des entiers inférieurs ou égaux à 12.

2. Matière plastique selon la revendication 1, comprenant au moins 60 % en poids dudit ester de cellulose, de 20 à 30 % en poids dudit plastifiant, de 10 à 15 % dudit polyester et de 1 à 2 % en poids dudit AQ-nylon.

3. Matière plastique selon la revendication 1 ou 2, dans laquelle ledit ester de cellulose est l'acétobutyrate et/ou l'acétate de cellulose et tout spécialement l'acétate de cellulose.

4. Matière plastique selon l'une quelconque des revendications précédentes, dans laquelle ledit plastifiant est choisi dans l'ensemble constitué par le triacétate de glycérol, un ester d'acide citrique, un ester d'acide tartrique et un ester d'acide succinique et est le plus préférentiellement un ester d'acide citrique ou le triacétate de glycérol.

5. Matière plastique selon la revendication 4, dans laquelle ledit ester d'acide citrique est le citrate d'acétyle et de triéthyle.

6. Matière plastique selon l'une quelconque des revendications précédentes, dans laquelle ledit polyester a une masse moléculaire de 500 à 3000 g/mole.

7. Matière plastique selon l'une quelconque des revendications précédentes, comprenant en outre un ester d'acide organique ou un acide organique, différent dudit plastifiant, de préférence l'ester diméthylique d'acide itaconique, l'acide laurique, l'acide maléique, et le poly(acide lactique), de préférence en une quantité allant jusqu'à 15 % en poids des composants restants.

8. Matière plastique selon l'une quelconque des revendications précédentes, comprenant en outre un additif inhibiteur d'inflammation, de préférence choisi dans l'ensemble contenant les composés organiques du phosphore, en particulier l'ester diméthylique d'acide hydroxéthanephosphorique, en une quantité allant jusqu'à 20 % en poids par rapport au poids des composants restants, ou les composés du fer, en particulier les composés organiques du fer(II), et/ou les composés du manganèse en une quantité allant jusqu'à 5 % en poids des composants restants.

9. Procédé pour produire la matière plastique selon l'une quelconque des revendications précédentes, comprenant les étapes consistant à :
a) mélanger ledit ester de cellulose, ledit plastifiant, ledit polyester et, si on le souhaite, lesdits esters d'acide organique différents dudit plastifiant et lesdits additifs inhibiteurs d'inflammation, et
b) chauffer, mouler par injection, extruder et/ou calandrer, traiter sous pression ou couler en film immédiatement après ledit mélange et en évitant essentiellement l'absorption d'humidité, pour produire une matière plastique biodégradable,
ledit AQ-nylon étant ajouté soit à l'étape a) soit à l'étape b).

10. Procédé selon la revendication 17, dans lequel, à l'étape a), le mélange est réalisé par mélange de poudres et de liquides ou utilisation de granulats desdits composants, lesdits granulats étant produits à l'étape a) par mélange des composants, extrusion et granulation de ceux-ci, et dans lequel il est de nouveau possible d'ajouter ledit AQ-nylon durant le mélange ou l'extrusion à l'étape a) ou en variante à l'étape b).
